# EUROPEAN PATENT APPLICATION

(11) **EP 2 109 039 A1**
(43) Date of publication of application: **14.10.2009**
(21) Application number: 08425235.2
(22) Date of filing: 08.04.2008
(51) Int. Cl.: G06F 9/44

(54) **Method and device for the implementation of a communication protocol in a control unit, especially for vehicular applications**

(71) Applicant: IVECO S.p.A., 10156 Torino (IT)
(72) Inventor: Cortese, Demetrio, 10093 Collegno (IT)
(74) Representative: Cinquantini, Bruno

(57) **Abstract**

A method and device for the implementation of a communication protocol in an independent control unit comprising:
• a first procedure, using a graphical interface, of importation of the information contained in the messages exchanged in a communication network to which the control unit has to be connected;
• a second procedure of configuration of the activities to be carried out on the communication messages;
• a third procedure of automatic generation of a model equivalent to a message to be transmitted of to be received, following the previous operations.

## Description

### Field of the invention

The present invention relates to a method and device for the implementation of a communication protocol in a control unit, especially for vehicular applications.

### Description of the prior art

The realization of control units in the vehicular field, and in general where high performances and high reliability are needed, is a critical point in the production process, because of the need of an efficient realization timing.

When more control units have to be integrated in a communication network suitable for managing different and concurrent processes, there is a very high probability that some errors occur during the realization of the control units.

Consequently the test periods are particularly long and the costs are high.

The management of the communication in the control units, may generally be defined as constituted by two fundamental processes: the first one is managed by the interface device called "CAN Driver", when the communication protocol is of the CAN type known in the art, and relates to the low-level interfacing with the vehicular communication network in terms of transmission and reception of the messages; the second one, defined as interpret/manipulator of the messages, has to interpret the received messages and to extract the information to be transmitted, starting from the information made available by the application software.

At present, the development of the so-called interpret/manipulator needs the intervention of two professionals, that is the system engineer, who defines the specifications and the functionalities of the messages that the control units has to manage, and the software engineer, who translates in the appropriate software language the specifications formulated by the system engineer.

In particular, the system engineer writes the specifications on the bases of the message standardization defined by the manufacturer for whom they work, for example according to the protocol J1939 of the type known, while the software engineer has to implement said specification considering the hardware characteristics of the specific control unit to be programmed. For this reason, when the control unit varies, it is necessary to implement again the application level functions which carry out the calls to the low-level function, in order to obtain the correct packing and unpacking of the messages.

Moreover, each manufacturer, even though they respect the communication standards, needs to develop its proprietary CAN messages and a specific management for the identification of the failures and their following recovery.

In the last years, the use of the commercial model-based application software has considerably simplified the writing of programming codes, but the time taken by the development and the high error probability are still a serious problem. In particular, the MatLab® package with the application software Simulink® by MathWorks® is a visual development environment that, by means of the graphical interconnection of blocks, allows to define the functional flowchart of any system and then to convert it into programming code.

In spite of this considerable simplification, the interaction with this development environment for the programming of control units is not suitable for professionals who are not particularly expert. For this reason it is essentially used by the software engineer, but it does not solve the problems about the writing of the functional specifications according to the corporate standards and their following implementation according to the specific control unit to be programmed.

Therefore, the technical problems connected to the complexity of the implementation operations of a communication protocol in a control unit and secondly to the writing of the technical documentation which can lead to wrong interpretations that causes a loss of time and of money, are still unsolved.

### Summary of the invention

The purpose of the present invention is to provide a method and device for the implementation of a communication protocol in a control unit, especially for vehicular application, able to solve the problems described above, in terms of minimization of the development time and of the error probability during the programming operations of the control unit, besides the facilitation of the interfacing operations between the engineer and the processing system.

A subject of the present invention is a method for the implementation of a communication protocol in a control unit, especially for vehicular applications, according to claim 1.

Another subject of the present invention is a device for the implementation of a communication protocol in a control unit, especially for vehicular applications, suitable for carrying out the method described above, according to claim 11.

Said device comprises at least a graphical interface allowing the selection of at least one input message, the filtering of this message according to at least one functional specification, the automatic generation of a block model equivalent to the message to be sent and the automatic conversion of the model into programming language.

The dependent claims describe the preferred embodiments of the invention, and are an integral part of this description.

### Brief description of the Figures

Further characteristics and advantages of the invention will be more apparent in light of a detailed description of a preferred, but non-exclusive, embodiment of a method and device for the implementation of a communication protocol in a control unit, shown with the help of the drawings that are attached hereto, which are merely illustrative and not limitative, in which:
Fig. 1 shows an example of a main graphical menu of a device suitable for the implementation of the method according to the present invention;
Fig. 2 shows an example of a first dialogue window that allows to select a message present in a database;
Fig. 3 shows an example of a second graphical interface which allows the configuration of the possible applicable filters of the signals correspondent to the data present in the imported message.

In the drawings the same reference numbers and letters are used to identify the same elements or components.

### Detailed description of a preferred embodiment of the invention

The method according to present invention may be applied in a system comprising at least one processing unit, and comprises the following steps:
- a first step of importation in high-level language, preferably in Matlab® format, of at least one information contained in a message, being the message contained in a pre-existing first Database and susceptible of being exchanged in a communication network to which the control unit is suitable of being connected;
- a second step of selection of at least one filter, pre-existing in a second Database, to be applied to at least one information contained in the message; and of setting/modification of the information contained in the message and of at least one operating parameter of the filter; or of the evaluation of the error conditions, the introduction of error resolution actions and the reset of the anomalous conditions;
- a third step of automatic generation of a model of the type Model-Based, preferably in Simulink® environment, equivalent to a message to be exchanged containing operating information/parameters set in the previous steps.

Said first step of importation in high-level language may comprise a selection step of a message from a pre-existing first Database, and a conversion step of said information into the Matlab® format.

Starting from the Model-Based model, it is possible to automatically generate a conversion into the C language by means of an appropriately configured commercial application software.

The conversion procedure is suitable for automatically converting a bit word contained in a message, in relation to its position in the message and to the type of message, into an engineering parameter of management and control, for example, the condition of a particular actuator or sensor, or at least a specific analogue value relative to a physical magnitude, such as temperature or pressure. In particular the message, composed by a set of bit words, is represented, for example on a screen, as a set of fields having an explicative meaning, making the nature of the message itself and its usage context more immediate.

This conversion procedure may be advantageously carried out by a parser, suitable for converting the bits into XML trees and, starting from these, into graphical representations more easily understandable.

For example, during the programming of a control unit for the management of an endothermic engine, the bit word referring to the engine temperature is automatically shown on the screen with an editable or non-editable field and with a label descriptive of its meaning.

Therefore, if there is a first database containing the list of the messages and their relative specifications used by a manufacturer for the data exchange in the systems, then it is possible to select the message, for example, from a first drop down menu. After that, the editable or non-editable fields are shown with their relative descriptive labels referring to all the bit words contained in the message.

If, on the contrary, this database is not present, it is possible to use a message analyzer, for example that using the CAN protocol, called CAN-analyzer, in order to fill said first database.

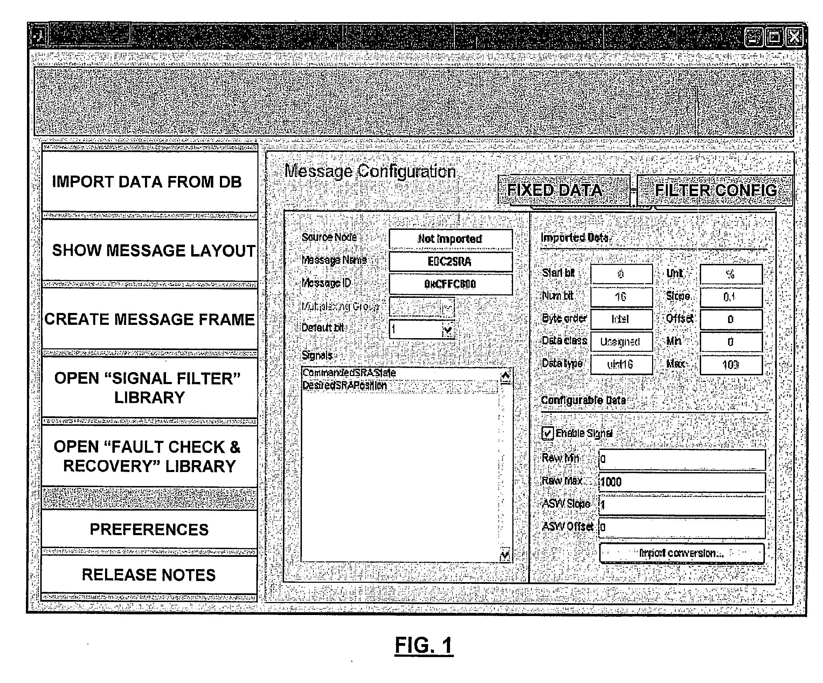

A new message, however, may be created at any time, see for example in figure 1 the command button "Create Message Frame" which allows to create a new object.

Since a message generally has to be processed/filtered by the control unit, then it is possible to graphically select, for example by means of a second drop down menu, at least one filter in order to manipulate the information contained in the received message and/or to compress and to add to a message to be sent the signals/information coming from a high-level application, supported by the application level of the control unit.

The characteristics of each filter are specified by means of a relative block diagram of the Model-Based type, for example in the Simulink® environment. The block diagrams are contained in a pre-existing second Database and are associated to a label. For this reason, the automatic generation of the Model-Based model comprises the setting of the operating parameters of the model relative to the filter selected by means of a dialogue window, comprising the labels explaining each parameter.

Therefore the automatic generation step of the model of the Model-Based type comprises the exploitation of the operating parameters of a pre-uploaded model in the second Database.

The association of a received message to a filter may be automatic, by associating to each message one single filter, or may be carried out manually.

Said second selection step comprises the input of data related to the fields contained in the selected message and the selection/setting of the operating parameters of the filter applied to the message.

Said third step of automatic generation, instead, comprises the translation/transposition of the previously set parameters into a Model-Based model, as to allow a predetermined model associated to a filter to operate according to the variables and the parameters previously set.

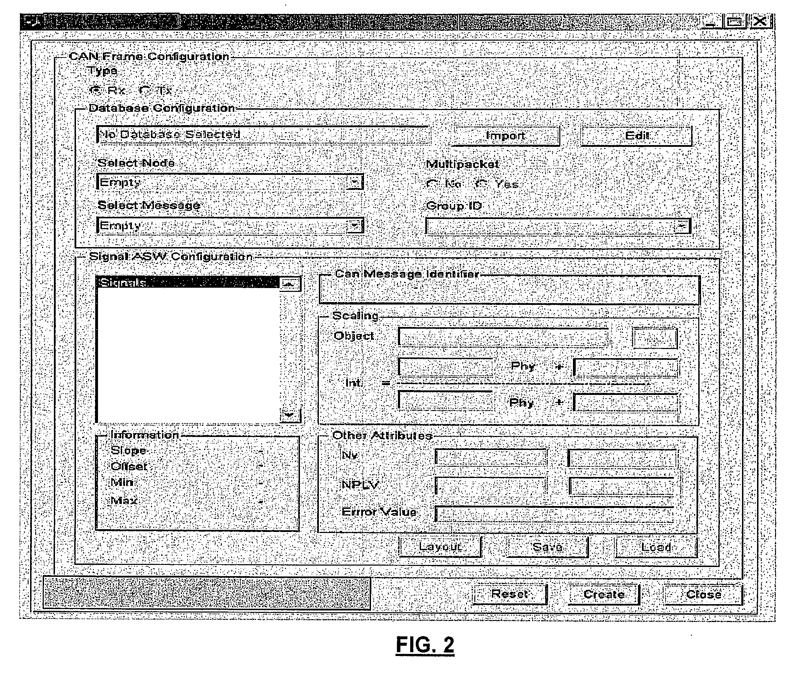

As regards an example of a device for the application of the method, with reference to figure 1, a first graphical interface comprises a command button called "Import Data from DB" which allows the activation of the first procedure of data import. Said command activates a dialogue window, as shown in figure 2, containing some select buttons which may be used to select the messages to be imported, both received and transmitted messages.

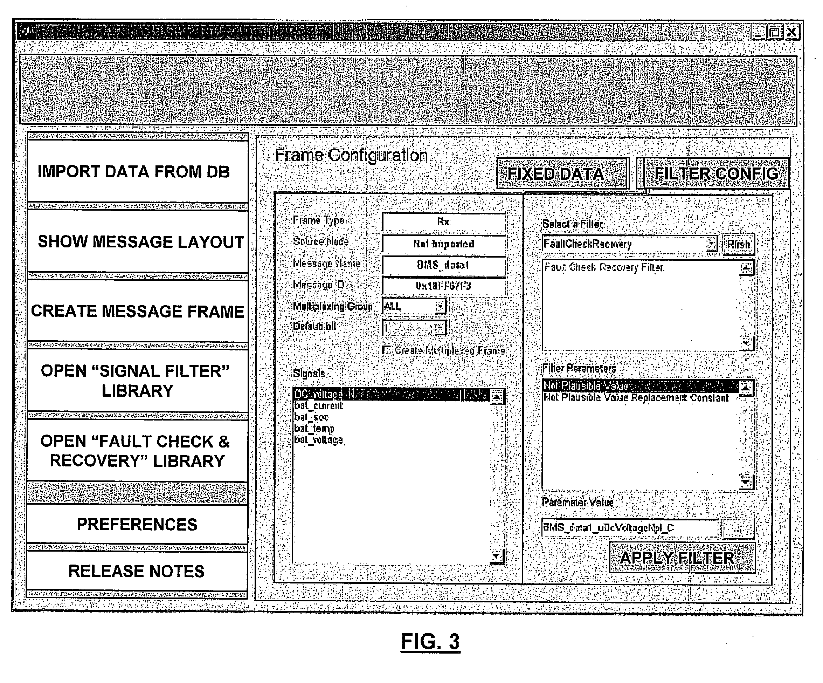

Once the selection is completed, the first graphical interface will be shown again, allowing to carry out the following operations:
- the data input in the fields characteristic of the selected message, using input means;
- the selection of a field applicable to the message, for example the same field as that shown in figure 3, by means of a command button called "Open Signal Filter Library" which opens a second dialogue window, similar to the first dialogue window, but suitable for the selection of a filter.

The first graphical interface comprises also a command button called "Filter Config" which activates a second graphical interface allowing to configure, once at a time, the filters applicable on the signals correspondent to the data contained in the imported message.

Finally, the second graphical interface comprises a further command button called "Apply Filter" which allows to automatically generate a Model-Based model in the Simulink® environment, equivalent to the message to be sent.

Then it is possible to convert into the C language, or other equivalent programming language, the generated model.

Advantageously, the fact that each field is described by a label, as are the filter or the filters processing the data contained in the message, allows the automatic generation of technical documents being structured according to some templates that are predefined according to each message and to the relative given fields, which are integrated, each time, with the specific information input in the first two steps of the method.

Each template may be advantageously contained in a third Database and associated to the respective message/filter/function, when needed.

This way it is possible to generate a technical document formatted according to a standard scheme and referring to messages and filters contained in the respective database and, in some cases, accompanied by their respective documentation. Said document is perfectly understandable by a system engineer or by a software engineer.

Advantageously, since the programming process may be carried out with the Simulink® application software, supported by the Matlab® environment, it is possible, thanks to the Matlab®'s functions, to obtain files, for example in C language, from the flowcharts mentioned above. This eliminates any possibility of human programming error, and considerably reduces the activity of the software engineer, keeping the quality of the programming code very high.

The present method and relative device may advantageously be applied to any development environment similar to Matlab® and Simulink®, moreover the implemented communication program may be any.

In particular, the present invention may be applied in the aerospace field, where the communication protocol between the processing unit is that identified by the number 1553.

Therefore the present invention may advantageously be embodied by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Method for the implementation of a communication protocol in a control unit, especially for vehicular applications, comprising the following steps:
- a first step of importation, in high-level language, of at least one information contained in a message, being the message contained in a pre-existing first Database and susceptible of being exchanged in a communication network to which the control unit is suitable of being connected;
- a second step of selection of at least one filter, pre-existing in a second Database, to be applied to at least one information contained in the message; and of setting/modification of the information contained in the message and of at least one operating parameter of the filter;
- a third step of automatic generation of a model of the Model-Based type, equivalent to a message to be exchanged containing operating information/parameters set in the previous steps.

2. Method according to claim 1, further comprising a conversion step of said Model-Based model into a programming language and/or machine language.

3. Method according to claim 1, wherein said high-level language is MatLab® and said Model-Based model is compatible with the Simulink® environment integrated in MatLab®.

4. Method according to claim 1, wherein said first step is carried out by means of an XML parser.

5. Method according to claim 1, further comprising a step previous or concurrent with the carrying out of the steps according to claim 1, wherein said first Database is filled by means of a protocol analyzer.

6. Method according to claim 1, further comprising a step previous or concurrent with the carrying out of the steps according to claim 1, wherein said first Database is filled by associating a Model-Based model to each filter.

7. Method according to claim 1, wherein the second selection step of at least one filter is automatically carried out by previously associating a message of the first Database to one single filter of the second Database.

8. Method according to claim 1, wherein the automatic generation step of the model of the Model-Based type comprises the exploitation of at least one operating parameter of a pre-uploaded model in the second Database, using input means, being said at least one operating parameter contained in a second Database and associated to a label, therefore the automatic generation of the Model-Based model comprises the setting of the operating parameters of the model relative to the selected filter by means of a dialogue window comprising the relative labels explaining each parameter.

9. Method according to any of the previous claims, further comprising an automatic generation step of technical documents being structured according to some templates that are predefined according to each message and to the relative given fields, which are integrated, each time, with the specific input information, being each data field described by a label, as are the filter or the filters processing the data contained in the message.

10. Method according to claim 9, wherein said templates are contained in a Database associated to the respective message/filter/function.

11. Device for the implementation of a communication protocol in a control unit, especially for vehicular applications, comprising means for carrying out the method according to any of the previous claims.

12. Device according to claim 11, wherein said means comprise at least a graphical interface, provided with data input means, command means, selection means, allowing the selection of at least one input message, the filtering of this message according to at least one functional specification, the automatic generation of a block model equivalent to the message to be sent and the automatic conversion of the model into programming language.

13. Computer program comprising program code means suitable for performing the steps of the claims from 1 to 11, when such program is run on a computer.

14. Computer-readable means comprising a recorded program, said computer-readable means comprising program code means suitable for performing the steps according to the claims from 1 to 11, when said program is run on a computer.
